# EUROPÄISCHE PATENTSCHRIFT

(11) **EP 1 802 524 B1**
(45) Veröffentlichungstag und Bekanntmachung des Hinweises auf die Patenterteilung: **08.01.2020**
(21) Anmeldenummer: 05797309.1
(22) Anmeldetag: 07.10.2005
(51) Int. Cl.: B60L 3/00, H01M 2/10, H02K 5/124, H01M 10/625, H01M 10/6567, H01M 10/6554, H01M 10/613, B63H 21/17, A63B 35/12, B63B 35/73, B63C 11/46, H02K 11/20, H02K 11/33, H02K 11/35, B60L 58/26

(54) **ELEKTRISCHES MOTORWASSERFAHRZEUG MIT KUEHLUNG DURCH UMGEBUNGSWASSER**
ELECTRIC MOTOR-DRIVEN WATER CRAFT, WHICH IS COOLED BY THE SURROUNDING WATER
BATEAU A MOTEUR ELECTRIQUE A REFROIDISSEMENT PAR L'EAU ENVIRONNANTE

(30) Priorität: 12.10.2004 DE 102004049615
(43) Veröffentlichungstag der Anmeldung: 04.07.2007
(60) Teilanmeldung: 19165323.7
(73) Patentinhaber: CAYAGO TEC GmbH, 32108 Bad Salzuflen (DE)
(72) Erfinder: GRIMMEISEN, Jürgen, 70469 Stuttgart (DE)
(74) Vertreter: Herrmann, Jochen
(86) Internationale Anmeldenummer: PCT/EP2005/010798
(87) Internationale Veröffentlichungsnummer: WO 2006/040078

(56) Entgegenhaltungen:
- WO-A-01/62347
- WO-A-95/31012
- DE-A1- 3 942 768
- DE-C1- 19 902 837
- US-A- 3 688 137
- US-A1- 2004 185 723
- US-A1- 2005 181 686
- SAFT INDUSTRIAL BATTERIES: "Saft lithium-ion batteries take to the waves" ENGINEERINGTALK, [Online] 19. März 2001 (2001-03-19), XP002361200 UK Gefunden im Internet: URL:http://web.archive.org/web/20040629074 917/http://www.engineeringtalk.com/news/sg t/sgt110.html> [gefunden am 2005-12-27]
- MULTI-CONTACT AG: "Neue Kontaktlamelle LA-CUT im Einsatz" MC - NEWS, [Online] Bd. 2003, Nr. 01, 2003, Seite 1,2,8, XP002361201 BASEL CH Gefunden im Internet: URL:http://web.archive.org/web/20030928222 545/http://www.multi-contact.com/AcroFiles /News/Archiv/News_2003_01_(D)_lo.pdf> [gefunden am 2005-12-27]

## Beschreibung

Die Erfindung betrifft ein Motorwasserfahrzeug mit einem Fahrzeugrumpf auf dem der Benutzer zumindest teilweise aufliegt oder sich aufstellt, mit einem im Fahrzeugrumpf verlaufenden Strömungskanal mit einer von einem Elektromotor getriebenen Wasserschraube, wobei der Fahrzeugrumpf den Elektromotor und Batterien sowie ein Steuergerät für den Elektromotor und die Wasserschraube, zumindest bereichsweise im Strömungskanal untergebracht sind.

Ein Motorwasserfahrzeug dieser Art ist durch die WO 96/30087 bekannt. Dabei liegt der Benutzer auf dem Fahrzeugrumpf und die Wasserschraube im Strömungskanal wird durch einen von Batterien gespeisten Elektromotor so angetrieben, dass eine Wasserströmung durch den Strömungskanal gesaugt wird, die entgegen der Fahrtrichtung des Motorwasserfahrzeuges verläuft.

Die Wasserströmung kann so vom Benutzer ferngehalten werden und mit der Form des Fahrzeugrumpfes kann auch die Fahrwasserströmung am Benutzer vorbei geleitet werden. Diese erleichtert das Schwimmen und das Tauchen mit dem Motorwasserfahrzeug.

Die Ausgestaltung des Motorwasserfahrzeuges ist im Aufbau kompliziert und von Seiten der Wartung aus betrachtet nicht benutzerfreundlich. Der Elektromotor ist über ein Getriebe an die Wasserschraube angekoppelt. Innerhalb des Fahrzeugrumpfes wird der Elektromotor gekühlt, um dessen Leistungsfähigkeit aufrecht zu erhalten. Die Leistung eines solchen Motorwasserfahrzeuges ist relativ begrenzt. Darüber hinaus weist es aufgrund des komplexen Aufbaus ein hohes Gewicht auf und wird dadurch unhandlich.

Es ist Aufgabe der Erfindung, ein Motorwasserfahrzeug der eingangs erwähnten Art zu schaffen, das einen hohen Wirkungsgrad aufweist.

Die Aufgabe der Erfindung wird durch ein Motorwasserfahrzeug gemäß dem Anspruch 1 gelöst.

Eine zuverlässige Abdichtung des Aufnahmegehäuses wird dadurch erreicht, dass der Rotor und der Stator in dem gegenüber der Umgebung wasserdicht verschlossenen Aufnahmegehäuse untergebracht sind, dass die Antriebswelle über eine Dichtkassette aus dem Aufnahmegehäuse herausgeführt ist, dass die Dichtkassette die Antriebswelle mittels wenigstens zwei Dichtringen abdichtet und dass die Dichtkassette in Achsrichtung verstellbar der Antriebswelle in unterschiedlichen Montagepositionen zuordenbar ist. Die versetzbare Dichtkassette ermöglicht es, die Dichtringe unterschiedlichen Wellenbereichen zuzuordnen. Dies wird dann erforderlich, wenn die Dichtringe sich nach gewisser Betriebsdauer in die Oberfläche der Antriebswelle eingearbeitet haben und dann die Gefahr einer Leckage auftritt.

Bei dem erfindungsgemäßen Motorwasserfahrzeug kann ein dauerhafter Betrieb mit hohem Wirkungsgrad auch dann sichergestellt werden, wenn vorgesehen ist, dass der Elektromotor als Innenläufermotor ausgebildet ist, dass der Stator des Elektromotors mittels einer Wärmeleiteinheit im wärmeführendem Kontakt mit einem Aufnahmegehäuse des Elektromotors steht, dass das Aufnahmegehäuse zumindest teilweise in dem der Wärmeleiteinheit zugeordneten Bereich aus wärmeleitfähigem Material besteht und dass das Aufnahmegehäuse zumindest teilweise im Strömungskanal angeordnet ist. Ein auf diese Weise ausgeführter Elektromotor kann zuverlässig seine Wärme an das strömende Wasser abführen. Die Wärmeleitfähigkeit sorgt dabei für eine eindeutige und schnelle Wärmeableitung. Bei dieser Anordnung kann auch auf zusätzliche Kühlvorrichtungen verzichtet werden, was den Teileaufwand für das Motorfahrzeug wesentlich verringert. Ebenso kann im Bedarfsfall auch das elektronische Steuergerät, welches die Schaltelektronik und gegebenenfalls Leistungsteile aufweist, im Wasser gekühlt werden.

Die Wärmeleiteinheit ist als wärmeleitende Vergussmasse ausgebildet, die mit dem Aufnahmegehäuse stoffschlüssig verbunden ist.

Auf diese Weise wird ein guter Wärmeübergang zwischen dem Stator und dem Aufnahmegehäuse des Elektromotors geschaffen.

Um den Elektromotor auf einfache Weise auf verschiedene Leistungsstufen umbauen zu können, kann es vorgesehen sein, dass das Gehäuse des Elektromotors eine Statoraufnahme bildet, in der bausatzartig verschiedene Statoren einbaubar sind, wobei die Statoren entsprechend unterschiedlichen Leistungsbereichen eine unterschiedliche Erstreckung in Achsrichtung der Antriebswelle des Rotors aufweisen.

Die Standzeit der Antriebswelle kann dadurch erhöht werden, dass die Lauffläche der Antriebswelle, auf der die Dichtringe ablaufen oberflächenvergütet, beispielsweise hartstoffbeschichtet sind.

Eine einfache Leckage-Überwachung ist dadurch möglich, dass zwischen zwei Dichtringen oder vorzugsweise nach den redundanten Dichtringen ein Leckagesensor angeordnet ist.

Erfindungsgemäß kann auch die Zusammenfassung von Wasserschraube, Elektromotor und Steuergerät für den Elektromotor zu einer Unterwasser-Antriebs-Einheit und deren Unterbringung im Strömungskanal vorgesehen sein. Dies bringt eine wesentliche Vereinfachung im Aufbau der Teile, insbesondere des Fahrzeugrumpfes und für die Wartung des Motorwasserfahrzeuges.

Ist nach einer Ausgestaltung vorgesehen, dass der Fahrzeugrumpf über dem Strömungskanal eine Liegefläche oder eine Plattform für den Benutzer aufweist, dann ist es in zwei Nutzungsarten verwendbar. Der konstruktive Aufbau lässt sich dadurch noch vereinfachen, dass der Strömungskanal einstückig in dem Fahrzeugrumpf ausgeformt ist.

Als besonders vorteilhaft hat sich eine Ausführung erwiesen, die dadurch gekennzeichnet ist, dass der Strömungskanal mit einer Einströmöffnung im Bereich des Buges des Fahrzeugrumpfes ausgeht und mit einer Ausströmöffnung im Bereich des Hecks des Fahrzeugrumpfes endet und dass die Unterwasser-Antriebs-Einheit als Schub- und Sauggerät in den Strömungskanal eingebaut ist.

Für die beiden unterschiedlichen Verwendungsarten des Motorwasserfahrzeuges im Liegen oder im Stehen ist eine Ausgestaltung von Vorteil, die dadurch gekennzeichnet ist, dass der Unterwasser-Antriebs-Einheit ein Fernsteuergerät zugeordnet ist, das am Fahrzeugrumpf lösbar angebracht und über eine drahtlose Übertragungsstrecke mit dem Steuergerät der Unterwasser-Antriebs-Einheit in Wirkverbindung bringbar ist.

Für eine einfache Wartung oder Reparatur der Unterwasser-Antriebs-Einheit ist zusätzlich vorgesehen, dass der Fahrzeugrumpf unterhalb der Unterwasser-Antriebs-Einheit im Strömungskanal eine zu öffnende Platte, Klappe oder dergleichen aufweist, über die Zugang zur Unterwasser-Antriebs-Einheit besteht.

Gemäß einer bevorzugten Ausgestaltungsvariante der Erfindung kann es vorgesehen sein, dass der Wasserschraube im Strömungskanal in Strömungsrichtung vor- oder nachgelagert ein Strömungsstator zugeordnet ist, der die im Strömungskanal erzeugte rotierende Wasserströmung zumindest teilweise gerade richtet. Der Strömungsstator nimmt die Rotationsbewegung des von der Wasserschraube beschleunigten Wassers auf und wandelt diese in eine zusätzliche Schubkraft um. Der erzeugte Wasserstrahl trifft ohne schubkraftzehrende spiralförmige Rotationsströmung auf das umgebende Wasser, wodurch sich ein effektiver Betrieb mit hohem Wirkungsgrad ergibt. Der Strömungsstator ist bevorzugt ortsfest direkt mit dem Fahrzeugrumpf verbunden.

Eine einfache Bauweise für den Strömungsstator ergibt sich dann, wenn vorgesehen ist, dass der Strömungsstator eine Vielzahl von Leitschaufeln aufweist, die konzentrisch im Strömungskanal angeordnet sind. Die Leitschaufeln können um einen Konus herum strömungsgünstig angeordnet sein.

Um eine optimale Beschleunigung des im Strömungskanal bewegten Wassers zu erreichen, kann es vorgesehen sein, dass der Strömungsstator im Bereich einer sich im Querschnitt verjüngenden Wasseraustrittsdüse (Difusor) des Strömungskanals angeordnet ist.

Die Erfindung wird im Folgenden anhand eines in den Zeichnungen dargestellten Ausführungsbeispieles eines Motorwasserfahrzeuges näher erläutert. Es zeigen:

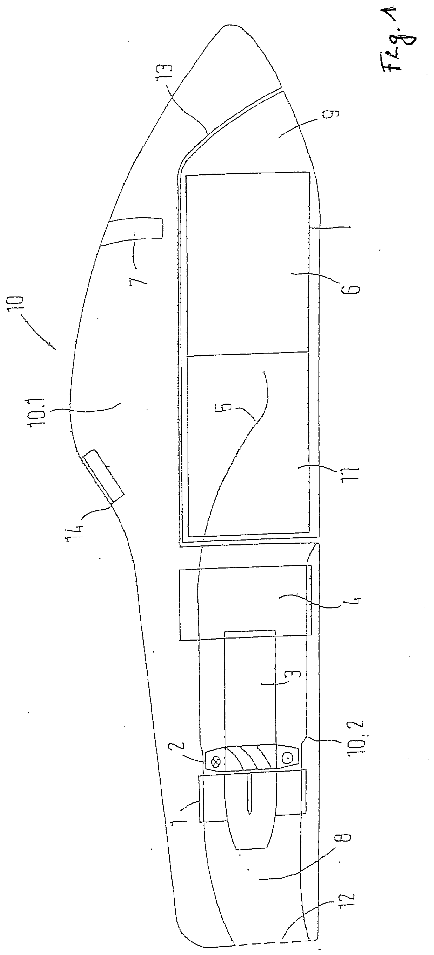

- Fig. 1: in Seitenansicht das Motorwasserfahrzeug und
- Fig. 2: einen Elektromotor des Motorwasserfahrzeuges in Seitenansicht und im Schnitt.

Die Außenkontur des Fahrzeugrumpfes 10 entspricht im Wesentlichen der Außenkontur des Fahrzeugrumpfes des aus der WO 96/30087 bekannten Motorwasserfahrzeuges.

Der Strömungskanal 8 erstreckt sich von der Einströmungsöffnung 11 im Bereich des Buges bis zum Strömungsaustritt 12 im Heckbereich des Fahrzeugrumpfes 10. Die Einströmöffnung 11 erstreckt sich dabei ausgehend von einem Mittenbereich des Fahrzeugrumpfes 10 in Richtung zum Bug. In den Strömungskanal 8, der im Bereich der Einströmungsöffnung 11 und der Ausströmungsöffnung 12 leicht nach unten gekrümmt ist, ist eine Unterwasser-Antriebs-Einheit aus Strömungsstator 1, Elektromotor 3, Wasserschraube 2 und Motorsteuergerät 4 eingebaut. Vorliegend ist der Strömungsstator ortsfest mit dem Fahrzeugrumpf 10 verbunden. Er hat die Aufgabe, die im Strömungskanal 8 erzeugte, rotierende Wasserströmung möglichst drallfrei gerade zu richten. Dadurch wird eine Wirkungsgradverbesserung erreicht. Das Motorwasserfahrzeug ist so auslegbar, dass ihr Einsatz im strömenden Wasser ohne Bedenken vorgenommen werden kann. Der Fahrzeugrumpf 10 kann daher außerhalb des Strömungskanals 8 freizügig vorgenommen werden und so einfach wie möglich, jedoch strömungsgünstig und benutzerfreundlich so gut wie möglich gestaltet werden.

Der Strömungskanal kann einstückig in dem Fahrzeugrumpf 10 ausgeformt sein. Im vorliegenden Ausführungsbeispiel wird der Strömungskanal 8 von einer Oberschale 10.1 und einer Unterschale 10.2 gebildet. Die Bauteile sind mittels geeigneter Befestigungsmittel miteinander verbunden. Für die Wartung der Unterwasser-Antriebs-Einheit wird der Strömungskanal 8 durch Abnehmen der Unterschale 10.2 zugänglich gemacht. Unterhalb der Unterwasser-Antriebs-Einheit kann aber auch eine Platte, Klappe oder dergleichen vorgesehen sein, über die Zugang zur Unterwasser-Antriebs-Einheit besteht. Im Bereich des Buges der Oberschale 10.1 des Fahrzeugrumpfes 10 ist in der Unterseite eine Ausnehmung 13 eingeformt, in die ein Gehäuse 9 mit den Batterien 5 und 6 lösbar eingesetzt ist. Das Gehäuse 9 mit den aufladbaren Batterien 5 und 6 ist leicht und schnell austauschbar und kann durch ein Gehäuse 9 mit geladenen Batterien 5 und 6 ersetzt werden, so dass das Motorwasserfahrzeug stets einsatzfähig ist.

Der Bereich der Einströmöffnung 11 des Strömungskanales 8 kann mittels des Gehäuses 9 derart überlagert, dass der freie Zugriff zu dem Rotor 2 verhindert ist, jedoch Wasser mit ausreichendem Volumenstrom förderbar ist. Mit dieser einfachen Maßnahme wird erreicht, dass der Rotor 2 erst bei abgenommenem Gehäuse 9 zugänglich ist, also dann, wenn der Elektromotor 3 stromlos ist.

Es kann auch vorgesehen sein, dass der Zugriff in den Strömungskanal 8 mittels Sperrelementen, die im Bereich der Einström- und/oder Ausströmöffnung angeordnet sind, verhindert ist.

Das Gehäuse 9 ist längs seiner beiden Seiten (backbord und steuerbord) und kielseitig gemäß strömenden Wasser ausgesetzt und kann hier optimal gekühlt werden, um eine unzulässige Erwärmung der Batterien 5 und 6 im Betrieb auszuschließen.

Liegt der Benutzer auf dem Fahrzeugrumpf 10, dann kann er sich an Griffelementen 7 oder Griffmulden festhalten. In eines oder beide Griffelemente 7 sind Bedienorgane eines Handsteuergerätes 14 integriert.

Ebenso kann auch ein drahtloses Fernsteuergerät vorgesehen sein. Dieses steht über eine Funkstrecke in Verbindung mit dem Motorsteuergerät 4. Das Handsteuergerät 14, das mit dem Motorsteuergerät 4 kommuniziert, ist im Sichtfeld des Benutzers am Fahrzeugrumpf 10 gehalten. Steht der Benutzer auf dem Fahrzeugrumpf 10, dann kann das Handsteuergerät 14 vom Fahrzeugrumpf 10 gelöst und benutzt werden. In diesem können verschiedene Betriebszustände, beispielsweise die aktuelle Fahrgeschwindigkeit, die Tauchtiefe oder der Ladezustand der Batterien 5 und 6 angezeigt werden.

Der Elektromotor ist als Innenläufermotor ausgebildet. Er ist direkt im Strömungskanal 8 eingebaut und gibt seine Wärme hier an das strömende Wasser ab, wie dies später noch näher erläutert wird.

Ebenso kann auch das Motorsteuergerät, das die Leistungselektronik und/oder einen Mikroprozessor aufweisen kann, im Strömungskanal 8 angeordnet und hier gekühlt sein. Alternativ kann das Motorsteuergerät 4 auch außerhalb des Strömungskanals 8 im Wasser angeordnet sein.

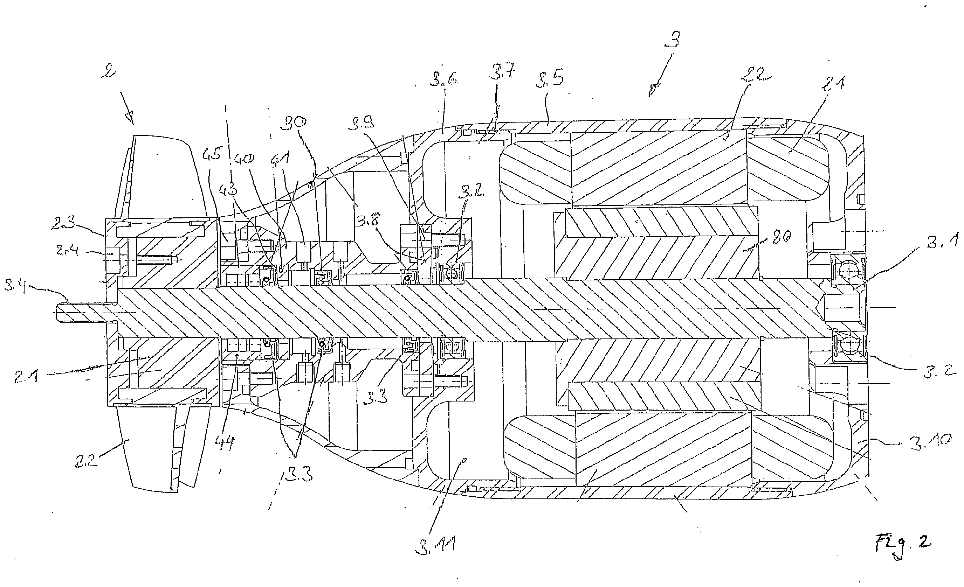

In der Figur 2 ist der Elektromotor 3 im Detail dargestellt. Demnach weist der Elektromotor 3 eine Antriebswelle 3.1 auf, die mittels zweier Lager 3.2 gelagert ist. Die Antriebswelle 3.1 ist an einem Wellenende mit einem Sitzabschnitt versehen, auf dem die Wasserschraube 2 montiert ist. Die Wasserschraube 2 ist dabei mit einem Grundkörper 2.1 auf der Antriebswelle 3.1 gehalten. Der Grundkörper 2.1 besitzt Steckaufnahmen, in die Propellerblätter 2.2 eingesetzt sind.

Zur Fixierung der Propellerblätter 2.2 in den Steckaufnahmen ist eine Abdeckung 2.3 verwendet. Diese ist mit dem Grundkörper 2.1 verschraubt (Verschraubung 2.4).

Die Antriebswelle 3.1 weist endseitig einen Gewindeabschnitt 3.4 auf. Auf diesen kann eine Mutter aufgedreht und die Wasserschraube 2 so festgelegt werden.

Die Antriebswelle trägt einen Rotor 20 des als Innenläufer ausgebildeten Antriebsmotors. Diesem ist ein ortsfester Stator 21 zugeordnet. Der Stator 21 ist mittels einer als Vergussmasse ausgebildeten Wärmeleiteinheit 22 mit der Innenwandung eines Aufnahmegehäuses 3.5 vergossen.

Das Aufnahmegehäuse 3.5 kann mittels eines, auf der der Wasserschraube 2 abgewandten Seite der Antriebswelle 3.1 angeordneten Gehäusedeckels 3.10 verschlossen werden. Auf der dem Gehäusedeckel 3.10 abgekehrten Seite schließt ein Gehäuseteil 3.6 das Aufnahmegehäuse 3.5 ab (Verschraubung 3.7). Der Gehäusedeckel 3.10 und das Gehäuseteil 3.6 weisen Lageraufnahmen für die beiden Lager 3.2 auf.

In dem Aufnahmegehäuse 3.5 ist eine Statoraufnahme 3.11 gebildet. Diese erstreckt sich über einen größeren als den von dem Stator 21 abgedeckten Bereich. Diese Bauweise erlaubt auch den Einbau größerer Statoren 21 (und Rotoren 20), so dass unterschiedliche Leistungsvarianten geschaffen werden können.

Im Bereich des Gehäuseteils 3.6 ist glockenartig ein Teilgehäuse 30 über die Antriebswelle 3.1 gesetzt. Innerhalb von dem Teilegehäuse 30 umschlossenen Raum ist eine Dichtkassette 40 angeordnet. Diese umgibt die Antriebswelle 3.1 und dichtet diese mittels dreier Dichtringe 3.3 (Radialwellendichtringe) ab. Die Dichtkassette 40 ist mit dem Gehäuseteil 3.6 unter Zwischenlage einer Distanzscheibe 3.8 abgedichtet verbunden (Verschraubung 3.9).

Das Teilgehäuse 30 ist mit dem Aufnahmegehäuse 3.5 abgedichtet verbunden. Hierzu wird das Teilegehäuse 30 mit der Dichtkassette 40 verspannt (Verschraubung 45).

Wie die Figur 2 erkennen lässt, sind im Bereich zwischen den Dichtringen 3.3 Räume angeordnet, in die Sensoren, welche in Sensorenaufnahmen 41 montierbar sind, ragen. Diese detektieren im Leckagefall eindringendes Wasser.

Um ein Einlaufen der Dichtringe 3.3 in die zugeordnete Lauffläche der Antriebswelle 3.1 zu verhindern, kann die Distanzscheibe 3.8 nach einer gewissen Einsatzdauer gegen eine Distanzscheibe 3.8 mit variierender Dicke ersetzt werden. Die Dichtringe 3.3 gelangen dann in einen unbenutzten Wellenbereich. Wie die Figur 2 weiter erkennen lässt, kann auch alleine der, der Wasserschraube 2 zugewandte Dichtring 3.3 verlagert werden (Distanzscheibe 43).

## Patentansprüche

1. Motorwasserfahrzeug mit einem Fahrzeugrumpf (10) auf dem ein Benutzer zumindest teilweise aufliegt oder sich aufstellt, mit einem im Fahrzeugrumpf (10) verlaufenden Strömungskanal (8) mit einer von einem Elektromotor (3) getriebenen Wasserschraube (2), wobei der Fahrzeugrumpf (10) den Elektromotor (3) und Batterien (5, 6) sowie ein Steuergerät (4) für den Elektromotor (3) und die Wasserschraube (2) enthält und diese zumindest bereichsweise im Strömungskanal (8) untergebracht sind, **dadurch gekennzeichnet, dass** der Elektromotor (3) als Innenläufermotor ausgebildet ist, wobei der Stator (21) des Elektromotors (3) mittels einer Wärmeleiteinheit (22) in einem wärmeführenden Kontakt mit einem Aufnahmegehäuse (3.5) des Elektromotors (3) steht, wobei das Aufnahmegehäuse (3.5) zumindest teilweise in dem Strömungskanal (8) angeordnet ist, wobei das Aufnahmegehäuse (3.5) zumindest teilweise in dem der Wärmeleiteinheit (22) zugeordneten Bereich aus wärmeleitfähigem Material besteht, wobei die Wärmeleiteinheit (22) als wärmeleitende Vergussmasse ausgebildet ist, die mit dem Aufnahmegehäuse (3.5) stoffschlüssig verbunden ist und wobei der Rotor (20) und der Stator (21) in dem gegenüber der Umgebung wasserdicht verschlossenen Aufnahmegehäuse (3.5) untergebracht sind, wobei eine Antriebswelle (3.1) über eine Dichtkassette (40) aus dem Aufnahmegehäuse (3.5) herausgeführt ist, wobei die Dichtkassette (40) die Antriebswelle (3.1) mittels wenigstens zwei Dichtringen (3.3) abdichtet und wobei die Dichtkassette (40) in Achsrichtung verstellbar der Antriebswelle (3.1) in unterschiedlichen Montagepositionen zuordenbar ist.

2. Motorwasserfahrzeug nach Anspruch 1, **dadurch gekennzeichnet, dass** das Gehäuse (3.5) des Elektromotors (3) eine Statoraufnahme (3.11) bildet, in der bausatzartig verschiedene Statoren (21) einbaubar sind, wobei die Statoren (21) entsprechend unterschiedlichen Leistungsbereichen eine unterschiedliche Erstreckung in Achsrichtung der Antriebswelle (3.1) des Rotors (20) aufweisen.

3. Motorwasserfahrzeug nach Anspruch 1 oder 2, **dadurch gekennzeichnet, dass** die Lauffläche der Antriebswelle (3.1), auf der die Dichtringe (3.3) ablaufen, oberflächenvergütet, beispielsweise hartstoffbeschichtet sind.

4. Motorwasserfahrzeug nach einem der Ansprüche 1 bis 3, **dadurch gekennzeichnet, dass** zwischen oder nach zwei oder mehr Dichtringen (3.3) ein Leckagesensor angeordnet ist.

5. Motorwasserfahrzeug nach einem der Ansprüche 1 bis 4, **dadurch gekennzeichnet, dass** der Strömungskanal (8) einstückig in dem Fahrzeugrumpf (10) ausgeformt ist.

6. Motorwasserfahrzeug nach einem der Ansprüche 1 bis 5, **dadurch gekennzeichnet, dass** der Strömungskanal (8) mit einer Einströmöffnung (11) im Bereich des Buges des Fahrzeugrumpfes (10) ausgeht und mit einer Ausströmöffnung (12) im Bereich des Hecks des Fahrzeugrumpfes (10) endet und dass eine Unterwasser-Antriebs-Einheit als Schub- und Sauggerät in den Strömungskanal (8) eingebaut ist.

7. Motorwasserfahrzeug nach einem der Ansprüche 1 bis 6, **dadurch gekennzeichnet, dass** der Unterwasser-Antriebs-Einheit ein Fernsteuergerät zugeordnet ist, das am Fahrzeugrumpf (10) lösbar angebracht und über eine drahtlose Übertragungsstrecke mit dem Steuergerät (4) der Unterwasser-Antriebs-Einheit in Wirkverbindung bringbar ist.

8. Motorwasserfahrzeug nach einem der Ansprüche 1 bis 7, **dadurch gekennzeichnet, dass** der Fahrzeugrumpf (10) unterhalb der Unterwasser-Antriebs-Einheit im Strömungskanal (8) eine zu öffnende Platte, Klappe oder dergleichen aufweist, über die Zugang zur Unterwasser-Antriebs-Einheit besteht.

9. Motorwasserfahrzeug nach einem der Ansprüche 1 bis 8, **dadurch gekennzeichnet, dass** Wasserschraube (2), Elektromotor (3) und Steuergerät (4) als Unterwasser-Antriebs-Einheit ausgebildet und im Strömungskanal (8) untergebracht sind und dass die Batterien (5, 6) für den Elektromotor (3) in ein getrenntes Gehäuse (9) eingebracht sind, das fest oder austauschbar im Fahrzeugrumpf (10) eingebaut ist.

10. Motorwasserfahrzeug nach einem der Ansprüche 1 bis 9, **dadurch gekennzeichnet, dass** der Wasserschraube (2) im Strömungskanal (8) in Strömungsrichtung vor- oder nachgelagert ein Strömungsstator (1) zugeordnet ist, der die im Strömungskanal (8) erzeugte rotierende Wasserströmung zumindest teilweise geraderichtet.

11. Motorwasserfahrzeug nach Anspruch 10, **dadurch gekennzeichnet, dass** der Strömungsstator (1) ortsfest mit dem Fahrzeugrumpf (10) verbunden ist.

12. Motorwasserfahrzeug nach Anspruch 10 oder 11, **dadurch gekennzeichnet, dass** der Strömungsstator (1) eine Vielzahl von Leitschaufeln aufweist, die konzentrisch im Strömungskanal (8) angeordnet sind.

13. Motorwasserfahrzeug nach einem der Ansprüche 10 bis 12, **dadurch gekennzeichnet, dass** der Strömungsstator (1) im Bereich einer sich im Querschnitt verjüngenden Wasseraustrittsdüse (Difusor) des Strömungskanals (8) angeordnet ist.

## Claims

1. A motor-driven water craft with a vehicle hull (10) on which a user at least partially rests or stands, having a flow channel (8) running in the vehicle hull (10) with a propeller (2) driven by an electric motor (3), wherein the vehicle hull (10) contains the electric motor (3) and batteries (5, 6) together with a control device (4) for the electric motor (3) and the propeller (2) and these are at least partially located in the flow channel (8), **characterised in that** the electric motor (3) is designed as an inrunner motor, wherein the stator (21) of the electric motor (3) is in thermally conductive contact with a receiving housing (3.5) of the electric motor (3) by means of a heat conducting unit (22), wherein the receiving housing (3.5) is arranged at least partially in the flow channel (8), wherein the receiving housing (3.5) is at least partially made of thermally conductive material in the region associated with the heat conducting unit (22), wherein the heat conducting unit (22) is designed as a heat conducting casting compound, which is materially connected to the receiving housing (3.5) and wherein the rotor (20) and the stator (21) are housed in the receiving housing (3.5) that is sealed water-tightly against the environment, wherein a drive shaft (3.1) is guided out of the receiving housing (3.5) via a sealing cassette (40), wherein the sealing cassette (40) seals the drive shaft (3.1) by means of at least two sealing rings (3.3) and wherein the sealing cassette (40) can be assigned to the drive shaft (3.1) in different mounting positions being adjustable in the axial direction.

2. The motor-driven water craft according to claim 1, **characterised in that** the housing (3.5) of the electric motor (3) forms a stator receptacle (3.11), in which different kit-like stators (21) can be installed, wherein the stators (21) corresponding to different power ranges have a different extension in the axial direction of the drive shaft (3.1) of the rotor (20).

3. The motor-driven water craft according to claim 1 or 2, **characterised in that** the running surfaces of the drive shaft (3.1), on which the sealing rings (3.3) run, are surface-harderned, for example coated with hard materials.

4. The motor-driven water craft according to any one of claims 1 to 3, **characterised in that** a leakage sensor is arranged between or after two or more sealing rings (3.3).

5. The motor-driven water craft according to any one of claims 1 to 4, **characterised in that** the flow channel (8) is integrally formed in the vehicle hull (10).

6. The motor-driven water craft according to any one of claims 1 to 5, **characterised in that** the flow channel (8) starts with an inflow opening (11) in the region of the bow of the vehicle hull (10) and ends with an outflow opening (12) in the region of the tail of the vehicle hull (10) and **in that** an underwater drive unit is installed as a push and suction device in the flow channel (8).

7. The motor-driven water craft according to any one of claims 1 to 6, **characterised in that** the underwater drive unit is associated with a remote control device which is removably attached to the vehicle hull (10) and can be brought into operative connection with the control unit (4) of the underwater drive unit via a wireless transmission path.

8. The motor-driven water craft according to any one of claims 1 to 7, **characterised in that** the vehicle hull (10) has below the underwater drive unit in the flow channel (8) an openable plate, flap or the like, via which there is access to the underwater drive unit.

9. The motor-driven water craft according to any one of claims 1 to 8, **characterized in that** the propeller (2), electric motor (3) and control unit (4) are formed as an underwater drive unit and are housed in the flow channel (8) and **in that** the batteries (5, 6) for the electric motor (3) are inserted into a separate housing (9) which is permanently or interchangeably inserted into the vehicle hull (10).

10. The motor-driven water craft according to any one of claims 1 to 9, **characterised in that** a flow stator (1) is assigned to the propeller (2) in the flow channel (8) in the upstream or downstream flow direction, said flow stator at least partially straightening up the rotating water flow generated in the flow channel (8).

11. The motor-driven water craft according to claim 10, **characterised in that** the flow stator (1) is fixedly connected to the vehicle hull (10).

12. The motor-driven water craft according to claim 10 or 11, **characterised in that** the flow stator (1) has a plurality of guide vanes, which are arranged concentrically in the flow channel (8).

13. The motor-driven water craft according to any one of claims 10 to 12, **characterised in that** the flow stator (1) is arranged in the region of a water outlet nozzle (diffuser) of the flow channel (8), said water outlet nozzle tapering in its cross section.

## Revendications

1. Bateau à moteur comprenant une coque (10) sur laquelle un utilisateur se couche ou se met debout, au moins partiellement, comprenant un conduit d'écoulement (8) s'étendant dans la coque (10) doté d'une hélice (2) entraînée par un moteur électrique (3), la coque (10) contenant le moteur électrique (3), des batteries (5, 6) et une unité de commande (4) pour le moteur électrique (3) et l'hélice (2) et ces éléments étant au moins partiellement logés dans le conduit d'écoulement (8), **caractérisé en ce que** le moteur électrique (3) est conçu comme un moteur à rotor interne, le stator (21) du moteur électrique (3) étant en contact thermoconducteur avec un carter de réception (3.5) du moteur électrique (3) par le biais d'une unité thermoconductrice (22), le carter de réception (3.5) étant au moins partiellement disposé dans le conduit d'écoulement (8), le carter de réception (3.5) étant constitué, au moins partiellement dans la région associée à l'unité thermoconductrice (22), de matériau thermoconducteur, l'unité thermoconductrice (22) étant conçue en tant que masse de scellement thermoconductrice qui est reliée par liaison de matière au carter de réception (3.5) et le rotor (20) et le stator (21) étant logés dans le carter de réception (3.5) rendu étanche à l'eau par rapport à l'environnement, un arbre d'entraînement (3.1) sortant du carter de réception (3.5) par l'intermédiaire d'une cassette d'étanchéité (40), la cassette d'étanchéité (40) rendant étanche l'arbre d'entraînement (3.1) au moyen d'au moins deux bagues d'étanchéité (3.3) et la cassette d'étanchéité (40) étant réglable dans la direction axiale et pouvant être associée à l'arbre d'entraînement (3.1) dans différentes positions de montage.

2. Bateau à moteur selon la revendication 1, **caractérisé en ce que** le carter (3.5) du moteur électrique (3) forme un logement de stator (3.11), dans lequel peuvent être installés différents stators modulaires (21), les stators (21) présentant une extension différente dans la direction axiale de l'arbre d'entraînement (3.1) du rotor (20) de façon correspondant aux domaines de puissance différentes.

3. Bateau à moteur selon la revendication 1 ou 2, **caractérisé en ce que** la surface de roulement de l'arbre d'entraînement (3.1) sur laquelle reposent les bagues d'étanchéité (3.3), est traitée en surface, par exemple revêtue d'un matériau dur.

4. Bateau à moteur selon l'une des revendications 1 à 3, **caractérisé en ce qu'**un capteur de fuite est disposé entre ou après au moins deux bagues d'étanchéité (3.3).

5. Bateau à moteur selon l'une des revendications 1 à 4, **caractérisé en ce que** le conduit d'écoulement (8) est formé d'un seul tenant dans la coque (10).

6. Bateau à moteur selon l'une des revendications 1 à 5, **caractérisé en ce que** le conduit d'écoulement (8) débouche par une ouverture d'entrée (11) dans la région de la proue de la coque (10) et se termine par une ouverture de sortie (12) dans la région de la poupe de la coque (10) et **en ce qu'**une unité de propulsion sous-marine est installée en tant que dispositif de poussée et d'aspiration dans le conduit d'écoulement (8).

7. Bateau à moteur selon l'une des revendications 1 à 6, **caractérisé en ce qu'**un appareil de commande à distance est associé à l'unité de propulsion sous-marine, qui est fixé de manière amovible sur la coque (10) de bateau et peut être à coopérer avec l'appareil de commande (4) de l'unité de propulsion sous-marine par une voie de transmission sans fil.

8. Bateau à moteur selon l'une des revendications 1 à 7, **caractérisé en ce que** la coque (10) présente, sous l'unité de propulsion sous-marine, dans le conduit d'écoulement (8), une plaque, un volet ou similaire pouvant s'ouvrir, permettant d'avoir accès à l'unité de propulsion sous-marine.

9. Bateau à moteur selon l'une des revendications 1 à 8, **caractérisé en ce que** l'hélice (2), le moteur électrique (3) et l'appareil de commande (4) sont conçus sous la forme d'une unité de propulsion sous-marine et logés dans le conduit d'écoulement (8) et **en ce que** les batteries (5, 6) pour le moteur électrique (3) sont insérés dans un carter séparé (9) qui est monté à demeure ou interchangeable dans la coque (10).

10. Bateau à moteur selon l'une des revendications 1 à 9, **caractérisé en ce qu'**un stator d'écoulement (1) est associé à l'hélice (2) dans le conduit d'écoulement (8) dans la direction d'écoulement en amont ou en aval, qui redresse au moins partiellement le flux d'eau rotatif généré dans le conduit d'écoulement (8).

11. Bateau à moteur selon la revendication 10, **caractérisé en ce que** le stator d'écoulement (1) est relié à demeure à la coque (10).

12. Bateau à moteur selon la revendication 10 ou 11, **caractérisé en ce que** le stator d'écoulement (1) comporte une pluralité d'aubes directrices qui sont disposées concentriquement dans le conduit d'écoulement (8).

13. Bateau à moteur selon l'une des revendications 10 à 12, **caractérisé en ce que** le stator d'écoulement (1) est disposé dans la région d'une buse de sortie d'eau (diffuseur) à section transversale conique du conduit d'écoulement (8).
